(19) Europäisches Patentamt
European Patent Office
Office européen des brevets

(11) **EP 1 697 177 B1**

(12) **EUROPÄISCHE PATENTSCHRIFT**

(45) Veröffentlichungstag und Bekanntmachung des Hinweises auf die Patenterteilung:
**22.08.2007 Patentblatt 2007/34**

(21) Anmeldenummer: **04762468.9**

(22) Anmeldetag: **22.07.2004**

(51) Int Cl.:
**B60R 21/0132** *(2006.01)*

(86) Internationale Anmeldenummer:
**PCT/DE2004/001618**

(87) Internationale Veröffentlichungsnummer:
**WO 2005/061281 (07.07.2005 Gazette 2005/27)**

(54) **VERFAHREN ZUR ANSTEUERUNG VON PERSONENSCHUTZMITTELN**

METHOD FOR CONTROLLING PERSONAL PROTECTION MEANS

PROCEDE POUR COMMANDER DES MOYENS DE PROTECTION DE PERSONNES

(84) Benannte Vertragsstaaten:
**DE ES FR GB IT SE**

(30) Priorität: **19.12.2003 DE 10360893**

(43) Veröffentlichungstag der Anmeldung:
**06.09.2006 Patentblatt 2006/36**

(73) Patentinhaber: **ROBERT BOSCH GMBH**
**70442 Stuttgart (DE)**

(72) Erfinder:
• **KOEHLER, Armin**
**74343 Sachsenheim (DE)**
• **BRANDENBURGER, Sabine**
**70192 Stuttgart (DE)**
• **SCHULLER, Hermann**
**71065 Sindelfingen (DE)**

(56) Entgegenhaltungen:
**WO-A-20/04018264      US-A- 5 014 810**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Stand der Technik

Die Erfindung geht aus von einem Verfahren zur Ansteuerung von Personenschutzmitteln nach der Gattung des unabhängigen Patentanspruchs.

Aus EP 458 796 B2, das die Merkmale des Oberbegriffs von Anspruch 1 zeigt, ist bereits ein Verfahren zur Ansteuerung von Personenschutzmitteln bekannt, bei dem in Abhängigkeit von den Crashvorgang charakterisierenden Parametern eine variable Schwelle für einen integrierten Beschleunigungswert eingestellt wird. Damit kann sehr genau auf den Crashverlauf und damit auf die Crashtypen bzw. die Crashschwere eingegangen werden. Insbesondere wird die variable Schwelle in Abhängigkeit von der Beschleunigung bestimmt und gegen diese Schwelle der Geschwindigkeitsabbau geprüft.

Vorteile der Erfindung

Das erfindungsgemäße Verfahren zur Ansteuerung von Personenschutzmitteln mit den Merkmalen des unabhängigen Patentanspruchs hat demgegenüber den Vorteil, dass eine Zeitentkopplung vorliegt. Nunmehr wird eine Schwellwertfläche verwendet, die durch Wertepaare aus Geschwindigkeitsabbau und einer Verzögerung bestimmt wird. Diesen Wertepaaren wird nämlich im Vorhinein eine Vorverlagerung zugeordnet, so dass im dreidimensionalen Raum damit eine Fläche definiert ist. Diese Fläche wird empirisch bestimmt. Aus dem Beschleunigungssignal wird eine Vorverlagerung berechnet, die mit dieser Schwellwertfläche verglichen wird und nur, wenn es zu einem Schneiden oder Berühren oder Durchstoßen dieser Schwellwertfläche kommt, wird eine Auslöseentscheidung für die Personenschutzmittel wie Airbag, Gurtstraffer oder Überrollbügel getroffen. Insbesondere wird durch das erfindungsgemäße Verfahren erreicht, dass das Verfahren weniger empfindlich gegenüber Schwankungen im erkannten Crashbeginn ist. Der Crashbeginn wird dadurch erkannt, dass ein Beschleunigungssignal eine meist konstante Rauschschwelle überschreitet. Diese kann typischerweise zwischen 3 und 4 g sein. Es ist möglich, dass die Rauschschwelle veränderbar ist, beispielsweise in Abhängigkeit von Signalen eines Precrashsensors. Wenn also die Beschleunigung diese Rauschschwelle überschreitet, dann beginnt die Integration und damit ist der Crash definiert. Um Fehlauslöseereignisse, wie den typischen Hammerschlag, eine Bordsteinüberfahrt oder ein Schlagloch zu eliminieren, wird typischer Weise nach Crashbeginn für eine gewisse Zeit eine Anhebung der Schwellwertfläche vorgenommen, um solche rasch abklingenden Ereignisse abzufangen. Liegt danach noch ein Beschleunigungswert über der Rauschschwelle vor, wird von einem Crash ausgegangen.

Durch die in den abhängigen Ansprüchen aufgeführten Maßnahmen und Weiterbildungen sind vorteilhafte Verbesserungen des im unabhängigen Patentanspruch angegebenen Verfahrens zur Ansteuerung von Personenschutzmitteln möglich.

Besonders vorteilhaft ist, dass die Schwellwertfläche durch zwei Schwellwerte nachgebildet wird, wobei der erste Schwellwert in Abhängigkeit von einem Geschwindigkeitsabbau festgelegt wird, um dann mit der aktuellen Vorverlagerung gemessen zu werden und der zweite Schwellwert in Abhängigkeit von der Verzögerung, also der Beschleunigung, eingestellt wird, wobei mit diesem zweiten Schwellwert ebenfalls die Vorverlagerung verglichen wird. Dies ist eine einfache Implementierung der erfindungsgemäßen Lehre.

Weiterhin ist es von Vorteil, dass die Schwellwertfläche in Abhängigkeit von einem Signal einer ausgelagerten Sensorik oder von wenigstens einem Kennwert verändert wird. Damit können Signale von ausgelagerten Sensoren wie Upfrontsensoren, Seitenaufprallsensoren, Insassenerkennungssensoren oder Umfeldsensoren zur Beeinflussung der Schwellwertfläche verwendet werden. Dabei kann beispielsweise bei einer unvermeidlichen Kollision, die mittels der Umfeldsensorik erkannt wurde, die Schwellwertfläche entsprechend abgesenkt werden, um zu einer raschen Auslösung der Personenschutzmittel zu gelangen. Aber auch Kennwerte, die auch mittels einer Sensorik innerhalb eines Airbagsteuergeräts bestimmt werden, wie der Crashtyp oder die Crashschwere, können zur Beeinflussung der Schwellwertfläche verwendet werden. Bei einer besonders großen Crashschwere kann dann die Schwellwertfläche entsprechend abgesenkt werden, um auch hier eine möglichst frühzeitige Auswertung der Personenschutzmittel zu erreichen.

Weiterhin ist es möglich, die Schwellwertfläche auch in Abhängigkeit von einer Crashphase einzustellen. Dabei wird in der ersten Phase, wie oben angedeutet, in der Hammerschlagphase die Schwellwertfläche angehoben, um eine Auslösung zu vermeiden und in der darauf folgenden Phase abgesenkt, um dann einen möglichen Crash zu detektieren. Nach einer bestimmten Zeit oder einer bestimmten Vorverlagerung oder einem bestimmten Geschwindigkeitsabbau kann die Schwellwertfläche wieder angehoben werden, um die Auslösung von Personenschutzmitteln bei einem sehr langsamen Crash zu verhindern. Wird der Geschwindigkeitsabbau beobachtet, dann ist es möglich, dass ab Erreichen eines bestimmten Geschwindigkeitsabbaus ein Zähler eingestellt wird und nach einer vorgegebenen Zeit geprüft wird, ob die Vorverlagerung die Schwellwertfläche durchstoßen hat. Desweiteren können unterschiedliche Crashphasen direkt mittels Schwellwerten auf die abgebaute Geschwindigkeit oder die aufgetretene Vorverlagerung realisiert werden, ein Timer (Zähler) kann somit entfallen und eine Zeitunabhängigkeit ist gewährleistet. Ist dies bis dahin nicht der Fall, wird die Schwellwertfläche angehoben, um die Auslösung bei einem weichen Crash zu verhindern.

Vorteilhafter Weise wird zur Steigerung der Robustheit des erfindungsgemäßen Verfahrens parallel die Vorverlagerung bzw. der Geschwindigkeitsabbau jeweils mit einem eigenen Schwellwert verglichen. Dieser Schwellwert ist beispielsweise zeitinvariant und soll diese Fälle abfangen, bei denen es mittels der Auswertung der Schwellwertfläche zu keiner Ansteuerung der Personenschutzmittel kommt, es aber auf Grund des Crashes zu einer Ansteuerung kommen sollte.

Vorteilhafter Weise kann die Vorverlagerung aus der Verzögerung und dem Geschwindigkeitsabbau mittels einer Reihenentwicklung, vorzugsweise einer Taylorreihenentwicklung, abgeschätzt werden. Diese Abschätzung kann dann insbesondere auch in die Zukunft erfolgen, so dass der Auslösezeitpunkt damit in einfacher Weise für die Zukunft bestimmt werden kann.

Zeichnung

Ausführungsbeispiele der Erfindung sind in der Zeichnung dargestellt und werden in der nachfolgenden Beschreibung näher erläutert.

Es zeigen

Figur 1           ein Blockschaltbild der erfindungsgemäßen Vorrichtung,
Figur 2           ein Flussdiagramm,
Figur 3a und 3b   die Schwellwertfläche,
Figur 4           ein Blockdiagramm,
Figur 5           ein Signalflussdiagramm

Beschreibung

Auslösealgorithmen zur Ansteuerung von Personenschutzsystemen basieren im Wesentlichen auf Signalen, die mittels Beschleunigungssensoren gewonnen werden. Zusätzlich können noch Signale von Umfeldsensoren, Drucksensoren, insbesondere zur Seitenaufprallsensierung und auch Signale von Sensoren zur Sitzbelegungserkennung verwendet werden. Die Beschleunigungssensoren können im Steuergerät, das sich meist im Bereich des Fahrzeugtunnels befindet, angeordnet sein oder auch als Seitenaufprall- oder Frontaufprallsensoren dienen. Frontaufprallsensoren sind meist am Kühlergrill befestigt, während die Seitenaufprallsensoren in der B-Säule bzw. dem Sitzquerträger angeordnet sind. Die Beschleunigungssignale werden zunächst mit einer Rauschschwelle verglichen. Dies ist notwendig, um ungefährliche Erschütterungen, wie sie beispielsweise durch Schlaglöcher oder andere Ereignisse hervorgerufen werden, zu unterdrücken. Dadurch entstehen Unsicherheiten im Crashbeginn. Es ist bereits vorgeschlagen worden, dann die Rauschschwelle in Abhängigkeit von Sensorsignalen zu beeinflussen.

Erfindungsgemäß wird jedoch vorgeschlagen, den Auslösealgorithmus zeitunabhängig zu gestalten. Dies wird dadurch erreicht, dass eine Schwellwertfläche definiert wird, die durch Wertepaare aus Verzögerung, Geschwindigkeitsabbau und Vorverlagerung definiert wird. Diese Schwellwertfläche wird dann mit der Vorverlagerung, die sich aus den Messwerten ergibt, verglichen. Kommt es zu einem Durchstoßen, Berühren oder Schneiden der Schwellwertfläche, dann kann von einem solchen Crash ausgegangen werden, der die Auslösung von Personenschutzmitteln bedingt. Die Schwellwertfläche kann in Weiterbildungen in Abhängigkeit von Kennwerten wie Crashschwere oder Crashtyp sowie Signalen ausgelagerter Sensoren wie Upfront-, Precrash- oder Seitenaufprallsensoren verändert werden, um auf die jeweiligen Gegebenheiten adaptiv zu reagieren.

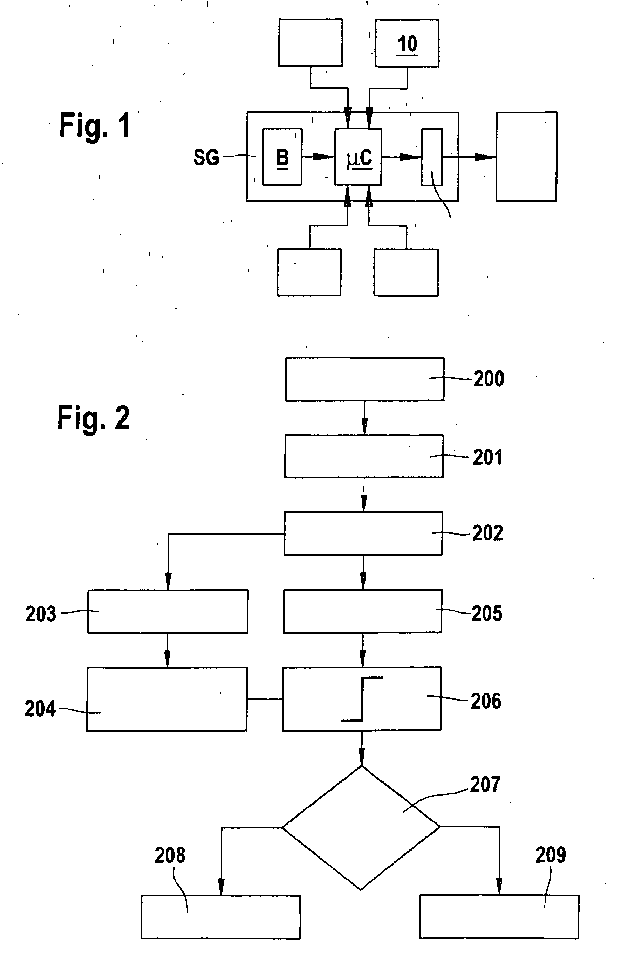

Figur 1 zeigt eine Vorrichtung, die das erfindungsgemäße Verfahren verwendet. Ein ' Steuergerät SG weist einen Mikrocontroller µC auf, der auch ein anderer Prozessortyp sein kann, an dessen ersten Dateneingang eine Beschleunigungssensorik B angeschlossen ist, die sich innerhalb des Steuergeräts SG befindet. Die Beschleunigungssensorik B misst beispielsweise in Fahrzeuglängsrichtung und in Fahrzeugquerrichtung, wobei die Beschleunigungssensoren dabei auch winklig dazu angeordnet sein können. Über einen ersten Datenausgang ist der Mikrocontroller µC mit einem Zündkreisbaustein FLIC verbunden. Der Zündkreisbaustein FLIC wird zur Zündung der Zündelemente verwendet. Weitere Details innerhalb des Steuergeräts SG, die einem Fachmann bekannt sind, sind hier der Einfachheit halber weggelassen. Der Zündkreisbaustein FLIC ist über einen Ausgang mit den Personenschutzmitteln RHS verbunden. An einen zweiten Dateneingang des Mikrocontrollers µC ist eine Upfrontsensorik UFS angeschlossen. Die Upfrontsensorik besteht meist aus Beschleunigungssensoren, die am Kühlergrill befestigt sind. An einen dritten Dateneingang des Mikrocontrollers µC sind Seitenaufprallsensoren PAS angeschlossen, die ebenfalls Beschleunigungssensoren und/oder Drucksensoren sein können, und sich in der B-Säule bzw. in der Fahrzeugtür befinden. An einen vierten Dateneingang des Mikrocontrollers µC ist eine Sitzbelegungserkennung IOS angeschlossen. Die Sitzbelegungserkennung IOS kann die Sitzbelegung über eine Gewichtsmessung, beispielsweise mit Kraftmessbolzen erkennen, oder eine Sitzmatte, oder es wird eine Innenraumvideoerkennung bzw. Ultraschall bzw. Radarerkennung verwendet. An einen fünften Dateneingang des Mikrocontrollers µC ist eine Umfeldsensorik 10 angeschlossen. Bei der Umfeldsensorik 10 handelt es sich um Kombinationen von Ultraschallsensoren, Radarsensoren und/oder Videosensoren (ggfs. Kontaktsensorik aus dem Fußgängerschutz). Bei den Radarsensoren sind im Allgemeinen 77 GHz bzw. 24 GHz üblich. Der Mikrocontroller µC führt das erfindungsgemäße Verfahren durch. Dazu verwendet er primär die Signale der Beschleunigungssensorik B, die integriert werden, um einen Geschwindigkeitsabbau zu erhalten, wobei eine weitere Integration die Vorverlagerung ergibt. In einem Speicher, beispielsweise in Look-Up-Tabellen sind für bestimmte Beschleunigungswerte und Geschwindigkeitsabbauwerte Vorverlagerungswerte eingetragen. Durch diese Wertepaare aus Beschleunigung (Verzögerung), Geschwindigkeitsabbau und Vorverlagerung sind eindeutige Punkte im Raum bestimmt, die zusammen eine Fläche ergeben, nämlich die Schwellwertfläche. Diese Schwellwertfläche wird mit den aktuellen Vorverlagerungen verglichen, um festzustellen, ob ein Auslösefall vorliegt.

Figur 2 zeigt in einem Flussdiagramm das erfindungsgemäße Verfahren. In Verfahrensschritt 200 wird mit der Sensorik B die Beschleunigung A gemessen. Diese wird in Verfahrensschritt 201 üblicherweise tiefpassgefiltert, um sie in Verfahrensschritt 202 einer einfachen und zweifachen Integration zuzuführen. Aus der Beschleunigung bzw. Verzögerung, dem Geschwindigkeitsabbau und der Vorverlagerung können in Verfahrensschritt 203 Kennwerte wie der Crashtyp und die Crashschwere bestimmt werden. Diese liegen dann in Verfahrensschritt 204 bereit, um gegebenenfalls die Schwellwertfläche zu beeinflussen. Die Vorverlagerung S 205, die sich aktuell ergibt und die mit einer Taylorreihenentwicklung nach folgender Formel bestimmt werden kann:

$$S(t_0 + \Delta t) = \underbrace{S(t_0)}_{\int\int a(t)dtdt} + v(t_0) + \frac{1}{2}a(t_0)\cdot\Delta t^2$$

$$a(t) = \frac{d}{dt}v(t) = \frac{d^2}{dt^2}s(t)$$

wird in Verfahrensschritt 206 mit der Schwellwertfläche verglichen, um dann in Verfahrensschritt 207 festzustellen, ob die Schwellwertfläche durchstoßen wird, und wann. Wurde die Schwellwertfläche zu einem Zeitpunkt durchstoßen, dann wird zu diesem Zeitpunkt in Verfahrensschritt 208 eine Ansteuerung der Personenschutzmittel RHS vorgenommen. Kommt es zu keiner Berührung der Vorverlagerung der Schwellwertfläche, dann wird in Verfahrensschritt 209 das Verfahren beendet. Die Beeinflussung der Schwellwertfläche durch weitere Parameter aus den ausgelagerten Sensoren, wie der Umfeldsensorik 10, der Upfrontsensorik UFS und der Seitenaufprallsensorik PAS sowie der Sitzbelegungserkennung IOS karin in einfacher Weise diesem erfindungsgemäßen Verfahren hinzugefügt werden.

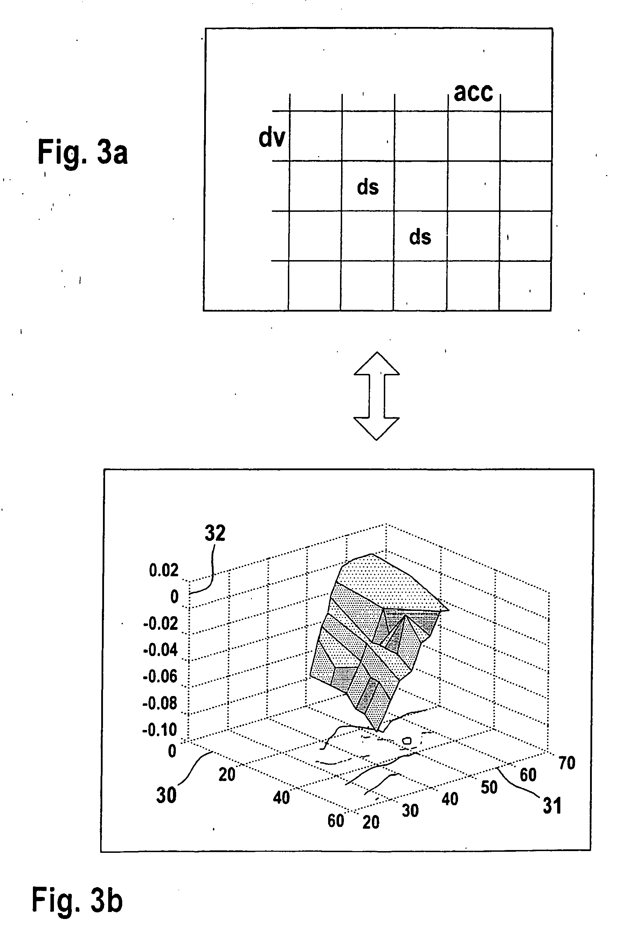

Figur 3 erläutert in den Abbildungen a und b das Aussehen und die Bildung der ' Schwellwertfläche. In Figur 3a ist das Schema dargestellt. Auf der Abszisse sind in der ersten Zeile Beschleunigungswerte ACC abgelegt und auf der Ordinate in der ersten Spalte Geschwindigkeitsabbauwerte. Zu diesen Wertepaaren werden dann Vorverlagerungswerte abgespeichert, die empirisch oder durch Simulation für diese Werte gewonnen wurden. Dies drückt sich dann in Figur 3b in der dargestellten Fläche im Raum aus. Die X-Achse wird durch die Verzögerungswerte 31 bestimmt, während die Y-Achse durch die Geschwindigkeitsabbauwerte 30 festgelegt ist. Die Z-Achse ist für die Vorverlagerungswerte. Beim Vorverlagerungswert 0 sind in dieser Ebene die Schwellwertlinien, die sich aus der Abhängigkeit zwischen Geschwindigkeitsabbau und Verzögerung ergeben, dargestellt. Eine aktuell bestimmte Vorverlagerung, die sich aus der gemessenen Beschleunigung ergibt, müsste, um es zu einer Auslösung der Personenschutzmittel kommen zu lassen, diese Fläche durchstoßen. Die Fläche hat für jeden Punkt, der durch Geschwindigkeitsabbau und Verzögerung definiert ist, nur einen Punkt.

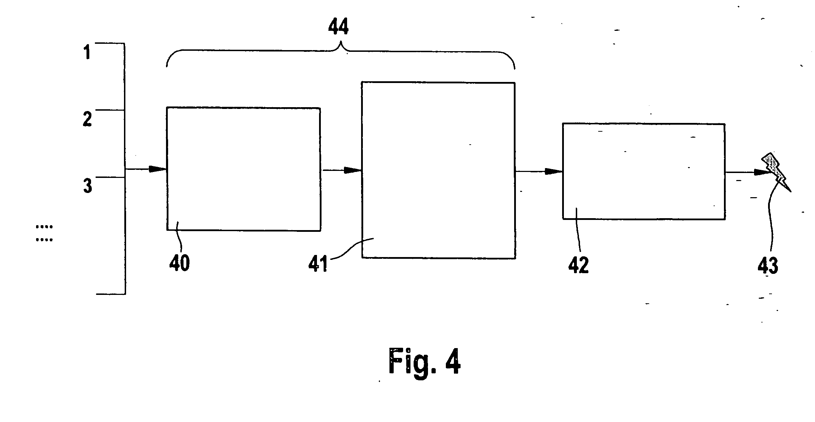

Figur 4 zeigt eine Gesamtdarstellung des Auslösealgorithmus als ein Blockschaltbild. Zunächst werden verschiedene Merkmale bestimmt. Dabei kann es sich um die Vorverlagerung, den Geschwindigkeitsabbau und die Beschleunigung, die beispielsweise auch gefiltert sein kann, handeln. Im Verfahrensschritt 40 kommt es zu einer Merkmalsfusion, um aus den einzelnen Werte aussagekräftige Kennwerte zu bilden. Diese Kennwerte werden in Verfahrensschritt 41 beispielsweise in Abhängigkeit von der Zeit oder von der Vorverlagerung oder von der abgebauten Geschwindigkeit als Crashtyp und Crashschwere bestimmt. Damit umfasst die Crashschwere und Crashtypbestimmung die Blöcke 40 und 41, die hier durch die Klammer 44 zusammengefasst sind. Im Block 42 erfolgt dann der zeitunabhängige Algorithmus, der erfindungsgemäß offenbart wurde. Zum Zeitpunkt 43 erfolgt die Auslöseentscheidung über die Personenschutzmittel.

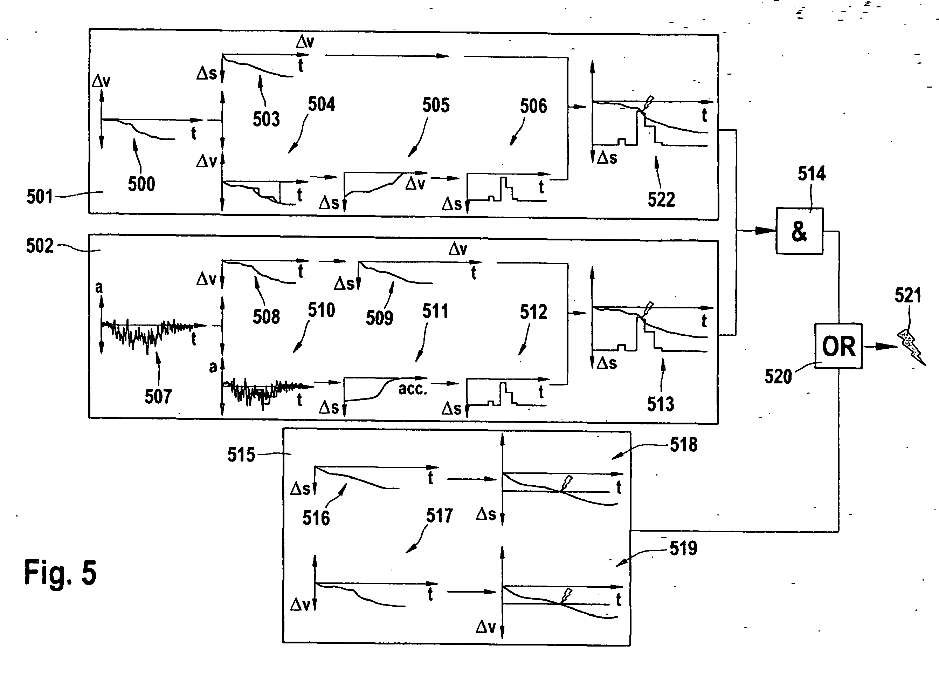

Figur 5 zeigt in einem Signalflussdiagramm, wie durch zwei Schwellwerte die Schwellwertfläche nachgebildet wird. Im Block 501 wird der Geschwindigkeitsabbau zur Schwellwertbildung für die Vorverlagerung herangezogen. Im Block 502 wird die Verzögerung zur Bildung des Schwellwerts für die Vorverlagerung verwendet. Nur, wenn beide Blöcke 501 und 502 eine Auslösung anzeigen, dann wird durch die UND-Verknüpfung 514 (hier ist auch eine ODER-Verknüfung denkbar. Die dreidimensionale Fläche wird somit entweder durch ein Maximum oder ein Minimum der beiden aus den Kennlinien gebildeten Flächen approximiert. Oder → Minimum, UND → Maximum) eine Auslöseentscheidung an das ODER-Gatter 520 weitergegeben, so dass dann eine Auslöseentscheidung 521 gefällt werden kann. Hier ist zusätzlich noch der Block 515 vorgesehen, der für die Fälle vorgesehen ist, in denen die Schwellwertfläche zu keiner Auslösung führt. Im Block 501 wird zunächst durch Integration der Verzögerung der Geschwindigkeitsabbau als Funktion der Zeit bestimmt. Dieses Signal wird einerseits einer Integration 503 zugeführt, um eine Vorverlagerung zu bestimmen. Andererseits wird dieses Signal einer Filterfunktion 504 zugeführt, mit einer Haltezeit t. Das so gefilterte Geschwindigkeitsabbausignal wird dann dazu verwendet, um in einer Look-Up-Tafel 505 den Schwellwert zu identifizieren für die aktuellen Geschwindigkeitsabbauwerte. Dieser Schwellwert wird dann in Verfahrensschritt 506 bereit gestellt, um ihn in Verfahrensschritt 522 mit der aktuellen Vorverlagerung zu vergleichen. Kommt es zumindest zu einer Berührung, liegt ein Auslösefall vor und ein entsprechendes Signal wird an das UND-Gatter 514 (altenativ ODER-Gatter) weitergeleitet. In Verfahrensschritt 502 wird das hochfrequente Rauschsignal 507 einerseits einer Filterung 510 und andererseits einer Integration 508 zugeführt. Auch die Filterung weist wiederum in Verfahrensschritt 510 eine Haltezeit auf. Das in Verfahrensschritt 508 einmal integrierte Signal ergibt den Geschwindigkeitsabbau, der dann erneut integriert wird, um die Vorverlagerung im Verfahrensschritt 509 zu erhalten. Das gefilterte Signal aus Block 510 wird dann dazu verwendet, um in einer Look-Up-Tafel in Block 511 den Schwellwert zu bestimmen. In dieser Look-Up-Tafel ist auf der Abszisse die Beschleunigung eingetragen und auf der Ordinate die Vorverlagerung. Daraus ergibt sich dann im Block 512 der entsprechende Schwellwert, der in Block 513 zum Vergleich mit der aktuellen Vorverlagerung $\Delta S$ verwendet wird. Kommt es auch hier zumindest zu einer Berührung der Vorverlagerung mit dem Schwellwert, dann wird ein entsprechendes Signal an das UND-Gatter 514 (alternativ ODER-Gatter), also eine logische Eins, weitergeleitet. Im Block 515 wird die Vorverlagerung im Block 516 bestimmt, beispielsweise durch Integration aus dem Geschwindigkeitsabbau, um dann mit einem festen Schwellwert in Block 518 verglichen zu werden. Im Block 517 wird mit einem festen Schwellwert in Block 518 verglichen zu werden. Im Block 517 wird durch die Integration der Verzögerung der Geschwindigkeitsabbau $\Delta V$ bestimmt, der ebenfalls mit einem Schwellwert in Verfahrensschritt 519 verglichen wird. Hier werden solche Fälle abgefangen, bei denen die zweidimensionale Fläche keinen Auslösefall feststellt. Sollte im Block 515 ein Auslösefall festgestellt werden, dann ergeht auf jeden Fall eine Auslöseentscheidung 521, da dieses Signal auf ein ODER-Gatter geht, mit dem der Ausgang des UND-Gatters 515 (alternativ ODER-Gatter) verglichen wird. '

## Patentansprüche

1. Verfahren zur Ansteuerung von Personenschutzmitteln (RHS) in Abhängigkeit von wenigstens einem von wenigstens einem Beschleunigungssensor (B) abgeleiteten Signal, **dadurch gekennzeichnet, dass** als das wenigstens eine Signal eine Vorverlagerung ($\Delta S$) verwendet wird, die mit wenigstens einer Schwellwertfläche verglichen wird, die in Abhängigkeit von einem Geschwindigkeitsabbau ($\Delta V$) und einer Verzögerung ($\Delta a$) eingestellt wird und dass in Abhängigkeit von dem Vergleich die Personenschutzmittel (RHS) angesteuert werden.

2. Verfahren nach Anspruch 1, **dadurch gekennzeichnet, dass** die Vorverlagerung ($\Delta S$) mit einem ersten Schwellwert verglichen wird, der in Abhängigkeit vom Geschwindigkeitsabbau ($\Delta V$) eingestellt wird und mit einem zweiten Schwellwert verglichen wird, der in Abhängigkeit von der Verzögerung (a) eingestellt wird, und dass mit dem ersten und zweiten Vergleich die Schwellwertfläche nachgebildet wird.

3. Verfahren nach Anspruch 1 oder 2, **dadurch gekennzeichnet, dass** die Schwellwertfläche in Abhängigkeit von einem Signal einer angelegten ausgelagerten Sensorik oder von wenigstens einem Kennwert verändert wird.

4. Verfahren nach einem der vorhergehenden Ansprüche, **dadurch gekennzeichnet, dass** die Schwellwertfläche in Abhängigkeit von einer Crashtyperkennung und/oder einer Crashschwere verändert wird.

5. Verfahren nach einem der vorhergehenden Ansprüche, **dadurch gekennzeichnet, dass** die Schwellwertfläche in Abhängigkeit von einer Crashphase eingestellt wird.

6. Verfahren nach Anspruch 5, **dadurch gekennzeichnet, dass** wenn ein vorgegebener Geschwindigkeitsabbau erreicht wird, eine erste Zahl abgewartet wird, ob die Vorverlagerung die Schwellwertfläche erreicht.

**7.** Verfahren nach einem der vorhergehenden Ansprüche, **dadurch gekennzeichnet, dass** zusätzlich die Vorverlagerung ($\Delta$S) und/oder der Geschwindigkeitsabbau ($\Delta$V) jeweils mit einem dritten Schwellwert verglichen wird.

**8.** Verfahren nach Anspruch 7, **dadurch gekennzeichnet, dass** der dritte Schwellwert konstant über der Zeit ist.

**9.** Verfahren nach einem der vorhergehenden Ansprüche, **dadurch gekennzeichnet; dass** die Vorverlagerung ($\Delta$S) mittels einer Reihenentwicklung abgeschätzt wird.

**10.** Verwendung eines Steuergeräts in einem Verfahren nach einem der Ansprüche 1 bis 9.

**Claims**

**1.** Method for actuating personal protection means (RHS) as a function of at least one signal which is derived from at least one acceleration sensor (B), **characterized in that** the at least one signal used is a forward displacement ($\Delta$S) which is compared with at least one threshold value area which is set as a function of a speed reduction ($\Delta$V) and a deceleration ($\Delta$a), and **in that** the personal protection means (RHS) is actuated as a function of the comparison.

**2.** Method according to Claim 1, **characterized in that** the forward displacement ($\Delta$S) is compared with a first threshold value which is set as a function of the speed reduction ($\Delta$V), and is compared with a second threshold value which is set as a function of the deceleration (a), and **in that** the threshold value area is simulated with the first and second comparison.

**3.** Method according to Claim 1 or 2, **characterized in that** the threshold value area is changed as a function of a signal from an attached external sensor system or of at least one characteristic value.

**4.** Method according to one of the preceding claims, **characterized in that** the threshold value area is changed as a function of the identification of the crash type and/or the severity of the crash.

**5.** Method according to one of the preceding claims, **characterized in that** the threshold value area is set as a function of a crash phase.

**6.** Method according to Claim 5, **characterized in that**, when a prespecified speed reduction is reached, a first number is awaited to check whether the forward displacement reaches the threshold value area.

**7.** Method according to one of the preceding claims, **characterized in that** the forward displacement ($\Delta$S) and/or the speed reduction ($\Delta$V) are/is in each case additionally compared with a third threshold value.

**8.** Method according to Claim 7, **characterized in that** the third threshold value is constant over time.

**9.** Method according to one of the preceding claims, **characterized in that** the forward displacement ($\Delta$S) is estimated by means of series expansion.

**10.** Use of a controller in a method according to one of Claims 1 to 9.

**Revendications**

**1.** Procédé de commande des moyens de protection de personnes (RHS) en fonction d'au moins un signal émis par au moins un capteur d'accélération,
**caractérisé en ce que**
comme au moins un signal, on utilise un prédéplacement ($\Delta$S), que l'on compare avec au moins une surface de valeur de seuil réglée en fonction d'une réduction de vitesse ($\Delta$V) et d'une temporisation ($\Delta$a), et les moyens de protection de personnes (RHS) sont commandés en fonction de la comparaison.

**2.** Procédé selon la revendication 1,
**caractérisé en ce que**
on compare le prédéplacement ($\Delta$S) à une première valeur de seuil, réglée en fonction de la réduction de vitesse

($\Delta$V), et à une deuxième valeur de seuil réglée en fonction de la temporisation (a), et la surface de valeur de seuil est reproduite avec les première et deuxième comparaisons.

3. Procédé selon la revendication 1 ou 2,
   **caractérisé en ce qu'**
   on modifie la surface de valeur de seuil en fonction d'un signal d'un capteur connecté à l'extérieur ou d'au moins une valeur caractéristique.

4. Procédé selon l'une quelconque des revendications précédentes,
   **caractérisé en ce qu'**
   on modifie la surface de valeur de seuil en fonction d'une identification de type de collision et/ ou d'une gravité de collision.

5. Procédé selon l'une quelconque des revendications précédentes,
   **caractérisé en ce qu'**
   on règle la surface de valeur de seuil en fonction d'une phase de collision.

6. Procédé selon la revendication 5,
   **caractérisé en ce que**
   si une réduction de vitesse prédéfinie est atteinte, on attend un premier chiffre, consistant à savoir si le prédéplacement atteint la surface de valeur de seuil.

7. Procédé selon l'une quelconque des revendications précédentes,
   **caractérisé en ce que**
   le prédéplacement ($\Delta$S) et/ou la réduction de vitesse ($\Delta$V) sont respectivement comparées en outre avec une troisième valeur de seuil.

8. Procédé selon la revendication 7,
   **caractérisé en ce que**
   la troisième valeur de seuil est constante dans le temps.

9. Procédé selon l'une quelconque des revendications précédentes,
   **caractérisé en ce que**
   le prédéplacement ($\Delta$S) est évalué au moyen d'un développement en série.

10. Utilisation d'un appareil de commande dans un procédé selon l'une quelconque des revendications 1 à 9.

# Fig. 1

SG — [ B ] → [ μC ] → [ ] → [ ]

[10]

# Fig. 2

200

201

202

203

205

204

206

207

208    209

## Fig. 3a

## Fig. 3b

Fig. 4

**Fig. 5**

EP 1 697 177 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 458796 B2